# EUROPÄISCHE PATENTSCHRIFT

(11) **EP 3 078 408 B1**
(45) Veröffentlichungstag und Bekanntmachung des Hinweises auf die Patenterteilung: **27.11.2019**
(21) Anmeldenummer: 16162572.8
(22) Anmeldetag: 29.03.2016
(51) Int. Cl.: B01D 46/00, B01D 46/10, B01D 46/52

(54) **FILTERELEMENT MIT LASCHE UND FILTERSYSTEM**
FILTER ELEMENT WITH FLAP AND FILTER SYSTEM
ÉLÉMENT DE FILTRE DOTÉ D'UNE ATTACHE ET SYSTÈME DE FILTRE

(30) Priorität: 09.04.2015 DE 102015004336
(43) Veröffentlichungstag der Anmeldung: 12.10.2016
(73) Patentinhaber: MANN + HUMMEL GMBH, 71636 Ludwigsburg (DE)
(72) Erfinder: Luley, Oliver, 67346 Speyer (DE); Tronet, Benoit, 76646 Bruchsal (DE); Diersch, Stefan, 95367 Trebgast (DE)
(74) Vertreter: Seyboth, Matthias

(56) Entgegenhaltungen:
- EP-A1- 0 490 169
- DE-A1-102007 057 616
- DE-A1-102009 042 588
- DE-A1-102013 015 648

## Beschreibung

### Technisches Gebiet

Die Erfindung betrifft ein Filterelement zum Filtern eines Fluids mit Lasche sowie ein Filtersystem, insbesondere zur Verwendung als Luftfilter, insbesondere zur Innenraumluftfilterung, insbesondere eines Fahrzeugs.

### Stand der Technik

Ein Filterelement, das beispielsweise als Kfz-Innenraum-Luftfilter bzw. Filterelement für eine Kraftfahrzeugklimaanlage eingesetzt wird, dient dazu, die von außen in den Innenraum des Fahrzeugs geleitete und aufbereitete Luft zu filtern. Dabei kommen beispielsweise Partikel- oder Geruchsfilter zum Einsatz oder Kombinationen davon, welche die in der Luft enthaltenen Partikel und inhärenten Gerüche aus der Umgebungsluft herausfiltern. Dabei hängt die Wirksamkeit eines Filters bzw. eines solchen Filtersystems auch davon ab, dass das Filtersystem in der richtigen Position in dem Filtergehäuse bzw. einer zugeordneten Filteraufnahme des Filtergehäuses montiert wird.

Aus der DE 10 2009 041 113 A1 ist eine Filteranordnung zum Filtern der Zuluft eines Kraftfahrzeugmotors bekannt, bei der an den gegenüberliegenden Längsseiten Laschen abstehen und schwenkbar am Filtermedium angelenkt sind. Das Filterelement wird in das Oberteil eines Filtergehäuses auf der Reinluftseite so eingerastet, dass die Laschen an den Gehäusewänden dichtend angelegt sind. Dabei zeigen die freien Enden der Laschen entgegen der Strömungsrichtung der Luft. Von der Anströmseite her einströmende Luft kann daher die beweglichen Laschen um deren festes Ende verschwenken und mit den freien Enden gegen die Gehäusewände anpressen. Dabei werden Laschen aus Vliesstoff verwendet. Die Laschen aus Vliesstoff stellen des Weiteren ein Filtermedium zur Verfügung, welches die Zuluft zum Kraftfahrzeugmotor zusätzlich filtert.

Weiter ist aus der DE 10 2009 042 588 A1 eine Filteranordnung bekannt.

### Offenbarung der Erfindung

Eine Aufgabe der Erfindung ist es, ein Filterelement zum Filtern eines Fluids, insbesondere zur Luftfilterung, insbesondere zur Innenraumluftfilterung, zu schaffen, das es erlaubt, das Filterelement zuverlässig dicht in ein Filtergehäuse einzusetzen.

Eine weitere Aufgabe ist es, ein Filtersystem zum Filtern eines Fluids zur Aufnahme eines solchen austauschbaren Filterelements zu schaffen, das es erlaubt, das Filterelement zuverlässig dicht in ein Filtergehäuse einzusetzen.

Die vorgenannte Aufgabe wird nach einem Aspekt der Erfindung gelöst von einem Filterelement zum Filtern eines Fluids, das wenigstens einen, insbesondere flachen, Filterbalg aus einem insbesondere zickzackförmig gefalteten Filtermedium mit einer bestimmungsgemäßen Rohseite und einer dieser gegenüberliegenden bestimmungsgemäßen Reinseite, umfasst, wobei an den Filterbalg umgebenden Stirnseiten umlaufend ein flächig aufgebrachtes Seitenband angeordnet ist, auf dessen Außenseite eine umlaufende Dichtung angeordnet ist. Dabei weist das Seitenband eine über die Reinseite des Filterbalgs überstehende Lasche auf, welche Lasche an den Stirnseiten V-förmig insbesondere an einer Klappkante zurückgeklappt über der Dichtung anordenbar ist.

Nach einem anderen Aspekt der Erfindung wird die weitere Aufgabe durch ein Filtersystem gelöst, das zur Aufnahme eines solchen Filterelements vorgesehen ist.

Günstige Ausgestaltungen und Vorteile der Erfindung ergeben sich aus den weiteren Ansprüchen, der Beschreibung und der Zeichnung.

Es wird ein Filterelement zum Filtern eines Fluids, insbesondere zur Luftfilterung, insbesondere zur Innenraumluftfilterung, insbesondere eines Fahrzeugs, vorgeschlagen, das wenigstens einen, insbesondere flachen, insbesondere zickzackförmig gefalteten Filterbalg aus einem Filtermedium mit einer bestimmungsgemäßen Rohseite und einer dieser gegenüberliegenden bestimmungsgemäßen Reinseite umfasst, wobei an den Filterbalg umgebenden Stirnseiten insbesondere vollständig umlaufend und insbesondere dicht mit dem Filterbalg verbunden ein flächig aufgebrachtes Seitenband angeordnet ist. An einer Außenseite des Seitenbandes ist eine insbesondere vollständig umlaufende Dichtung angeordnet. Dabei weist das Seitenband eine über die Reinseite des Filterbalgs überstehende Lasche auf, welche Lasche an den Stirnseiten V-förmig zurückgeklappt über der Dichtung anordenbar ist.

Erfindungsgemäß wird ein Teil des zur seitlichen Abdichtung des Filterbalgs, insbesondere bei einem zickzackförmig gefalteten Filtermedium, angeordneten Seitenbands, der über eine untere Kante des Filterbalgs, der die Reinseite begrenzt, übersteht, zurückgeklappt und ragt so V-förmig zum an den Stirnseiten angebrachten Seitenband abstehend nur teilweise über die Dichtung bzw. deren Außenfläche.

Teilweise ist hier insbesondere so zu verstehen, dass die Dichtung bzw. deren Außenfläche quer zur Umlaufrichtung der Dichtung teilweise überragt wird. Die Lasche überdeckt die Dichtung bzw. deren Außenfläche derart, dass ein insbesondere vollständig umlaufender, nicht von der V-förmigen Lasche überdeckter Bereich einer insbesondere von dem Seitenband abgewandten, insbesondere parallel zu diesem angeordneten Außenfläche der Dichtung frei bleibt, der eine Breite von mindestens 20 % der Breite der Außenfläche der Dichtung aufweist und somit weiterhin dichtend an einem Filtergehäuse anlegbar ist. Beim Einführen in ein Filtergehäuse wird diese V-förmige Lasche an die Dichtung angepresst und zumindest teilweise, insbesondere im Bereich der Überdeckung zwischen V-Lasche und Dichtung zwischen Dichtung und Filtergehäuse eingeklemmt, sodass die Lasche damit am Filtergehäuse fest fixiert ist und/oder anliegt. Insbesondere in eingebautem Zustand wird damit bei der Kombination aus der V-förmig zurückgeklappten Lasche und der Dichtung eine Abdichtung des Filterelements bei Einbau in ein Filtergehäuse sowohl von der Lasche als auch von der Dichtung bewirkt, da der nicht von der V-Lasche überdeckte Bereich einer Außenfläche der Dichtung weiterhin dichtend an einem Filtergehäuse anlegbar ist. Auf diese Weise ist ein vereinfachter Einschub des Filterelementes in ein Filtergehäuse möglich, wodurch insbesondere der Kraftaufwand zum Einführen des Filterelements in das Filtergehäuse reduziert wird.

Die Dichtung, die beispielsweise aus Moosgummi ausgebildet sein kann und als Rechteckprofil ausgeführt sein kann, wird zweckmäßigerweise auf das Seitenband aufgeklebt. Dafür kann die Dichtung eine Klebeschicht aufweisen, mit der die Dichtung auf das Seitenband aufgeklebt sein kann. Alternativ kann die Dichtung auch direkt als Dichtmittelraupe auf das Seitenband aufgebracht werden. Da der Querschnitt (Breite/Länge) des Filterelementes günstigerweise größer als der Querschnitt des Filtergehäuses gewählt wird, entsteht eine Überdeckung und die Dichtung wird beim Einsetzen des Filterelements in das Filtergehäuse verpresst. Dadurch könnte sich die Dichtung vom Seitenband lösen und undicht werden. Durch das Überlappen der Lasche mit der Dichtung kommt beim Einführen des Filterelementes in das Filtergehäuse bevorzugt zunächst die V-Lasche zur Anlage am Gehäuse, beispielsweise am Rand einer gehäuseseitigen Dichtfläche oder auf der gehäuseseitigen Dichtfläche. Durch das Überlappen der Lasche mit der Dichtung wird ferner die Dichtung vorverpresst und die Kompression beim Einsetzen des Filterelements in das Filtergehäuse ohne Ablösen der Dichtung erreicht. Die Verpressung erfolgt derart, dass die Außenfläche der Dichtung in Richtung des Seitenbandes bewegt wird. Da dies senkrecht zur Durchströmungsrichtung und Einbaurichtung erfolgt, spricht man hierbei auch von einer Radialdichtung oder radial anliegenden Dichtung. Beim Einführen in ein Filtergehäuse wird die V-förmige Lasche insbesondere derart an die Dichtung angepresst, dass die V-förmige Lasche eine Einführschräge bildet, die die Gefahr des Abscherens der Dichtung beim Einführen in ein Filtergehäuse reduziert. Die V-Lasche erfährt dabei bevorzugt eine Kraft in Richtung der Dichtung, wodurch die Dichtung in dem Bereich, in welchem die V-Lasche an dieser anliegt, leicht vorverpresst wird. Dadurch kann das Filterelement mit der Dichtung leichter in einer Richtung normal zur bestimmungsgemäßen Reinseite oder Rohseite in ein Filtergehäuse eingebaut werden, insbesondere dann, wenn die Dichtung in unverpresstem Zustand eine größere Ausdehnung hat als die Einbauöffnung. Die Lasche wirkt so unterstützend als Einführhilfe beim Einsetzen des Filterelements in das Filtergehäuse.

Auf Grund des erleichterten Einsetzens des Filterelements in das Filtergehäuse durch die Kraftreduktion beim Einsetzen sowie der Vorverpressung der Dichtung kann die Querschnittsfläche des Filterelements günstigerweise auch vergrößert werden, da die Dichtung einfacher und effektiver verpresst werden kann und somit die Überdeckung mit einem Einbaumaß des Filtergehäuses erhöht werden kann. Dadurch können die Filtrationseigenschaften verbessert werden, beispielsweise durch eine Erhöhung der Standzeit und/oder eine Verringerung der Anströmgeschwindigkeit des Fluids bei Erhöhung der Filterfläche.

Weiter wird die Dichtwirkung sowohl von der Dichtung als auch, zumindest teilweise, von der Lasche übernommen, da die Lasche durch den Volumenstrom an die Wand des Filtergehäuses angepresst wird. Dadurch wird eine Erhöhung der Dichtwirkung erreicht.

Vorteilhaft kann die erfindungsgemäße Lösung einer Lasche, welche V-förmig zurückgeklappt zumindest teilweise über der Dichtung liegt, auf Flachfilterelemente zur Luftfilterung, insbesondere zur Innenraumluftfilterung, bei denen radiale verpressbare Dichtungen zum Einsatz kommen, verwendet werden.

Gemäß einer vorteilhaften Ausgestaltung kann die Lasche die Dichtung an einer insbesondere vom Seitenband abgewandten Außenseite wenigstens teilweise überdecken. Dadurch ist gewährleistet, dass beim Einsetzen des Filterelements in ein Filtergehäuse, die Lasche zwischen Dichtung und Wand des Filtergehäuses eingeklemmt wird und so sowohl das Einsetzen des Filterelements durch eine Vorverpressung der Dichtung erleichtert als auch eine zusätzliche Dichtwirkung über die Lasche erfolgen kann. Auch kann das Filterelement so leichter in das Filtergehäuse hineingleiten, sodass das Risiko, dass die Dichtung sich vom Seitenband löst, reduziert wird.

Bevorzugt überdeckt die V-förmige Lasche ausschließlich den Teil einer insbesondere vom Seitenband abgewandten Außenfläche der Dichtung, der einer Klapp- oder Biegekante, an welcher die V-förmige Lasche umgelegt ist, näher ist. Dieser der Klapp- oder Biegekante näher gelegene Bereich der Außenfläche der Dichtung ist bevorzugt jeweils ein von den V-Laschen abgedeckter, insbesondere durchgehender Streifen. Der der Klapp- oder Biegekante abgewandte Bereich der Außenfläche der Dichtung steht somit als Dichtfläche zur Abdichtung gegen ein Filtergehäuse zur Verfügung. Dieser der Klapp- oder Biegekante abgewandte Bereich der Außenfläche der Dichtung ist bevorzugt jeweils ein entlang der V-Laschen verlaufender, insbesondere durchgehender, entlang dem abgedeckten Streifen verlaufender Dichtstreifen. Die beiden Streifen (d. h. der abgedeckte Streifen und der Dichtstreifen) haben jeweils bevorzugt eine Breite von mindestens 20 %, bevorzugt mindestens 30 % der Breite der Außenfläche der Dichtung und sind besonders bevorzugt jeweils gleich breit. Da die V-Laschen die Dichtung in den Eckbereichen des Filterelementes nicht überdecken, steht dort die volle Breite (insbesondere der Außenfläche) der Dichtung als Dichtfläche zur Abdichtung gegen ein Filtergehäuse zur Verfügung. In diesem Bereich ist oftmals auch der Querschnitt der Dichtung schon dadurch leicht vorverformt, dass die Dichtung um die Ecke gelegt wird. Daher, und auch aufgrund der geringen Ausdehnung dieser Bereiche, ist es unschädlich, wenn die V-Laschen an diesen Eckpositionen keine Einführrampe bieten und keine Vorverpressung erzeugen können.

Gemäß einer vorteilhaften Ausgestaltung kann die Lasche wenigstens bis zu einer der Reinseite zugewandten Kante der Dichtung heranreichend ausgebildet sein. Damit ist gewährleistet, dass die Lasche beim Einsetzen des Filterelements in das Filtergehäuse zumindest den Bereich bis zur Dichtung voll abdeckt und so eine zusätzliche Filterwirkung und Abdichtung durch die Lasche gegeben ist. Auch kann das Filterelement so leichter in das Filtergehäuse eingeführt werden, sodass das Risiko, dass die Dichtung sich vom Seitenband löst, reduziert wird.

Gemäß einer vorteilhaften Ausgestaltung kann die Lasche mit ihrem freien Ende höchstens bis unterhalb einer der Rohseite zugewandten Kante der Dichtung heranreichend ausgebildet sein. Damit ist gewährleistet, dass die Lasche nicht über die Dichtung hinausragt, wodurch das Anliegen der Dichtung an die Wand des Filtergehäuses und das Vorhandensein einer zuverlässigen Dichtwirkung nicht sichergestellt wäre. So wird beim Einsetzen des Filterelements in das Filtergehäuse zumindest ein Teil der Dichtung an der Wand anliegen, da die Lasche beim Einführen in das Filtergehäuse zumindest zum Teil zurückgezogen wird und so einen Teil der Dichtung freilegt.

Gemäß einer vorteilhaften Ausgestaltung kann das Filtermedium entlang von Faltkanten zickzackförmig zu Falten gefaltet sein, die sich jeweils zwischen gegenüberliegenden Stirnkanten des Filterbalgs erstrecken, und jeweils auf den gegenüberliegenden Stirnseiten parallel zueinander verlaufende Stirnkantenflächen aufweisen und auf den quer dazu liegenden Stirnseiten Stirnflächen aufweisen. Dabei kann der Filterbalg an den Stirnkantenflächen und Stirnflächen mit dem Seitenband abgedichtet sein. Gerade bei einem gefalteten Filtermedium werden Seitenbänder verwendet, um die Stirnkantenflächen und Stirnflächen abzudichten. Deshalb ist es besonders günstig, dieses Seitenband mit einer überstehenden Lasche zu versehen, die dazu dienen kann, das Filterelement so leichter in ein Filtergehäuse einzuführen und zuverlässig abzudichten. Damit sind solche gefalteten Filtermedien besonders begünstigt zum Anwenden der erfindungsgemäßen Lösung mit V-förmig ausgebildeter Lasche als Einführhilfe und zusätzlicher Abdichtungsmöglichkeit.

Die Seitenbänder bilden üblicherweise die Seitenflächen eines insbesondere geraden, beispielsweise 4-eckigen, bevorzugt rechteckigen Prismas. Dessen Grundflächen sind bevorzugt durch die durchströmten Flächen definiert, insbesondere die Rein- und Rohseite, insbesondere jeweils definiert durch die Faltkanten des Filtermediums. Die Höhe dieses Prismas wird bestimmt durch die Breite der Seitenbänder (ohne V-Lasche), die üblicherweise umlaufend konstant ist. Bevorzugt ist an jeder Seite des Prismas ein Seitenband und eine V-Lasche vorgesehen, d. h. im Falle eines 4-seitigen (z. B. rechteckigen Prismas) sind 4 V-Laschen vorgesehen.

Gemäß einer vorteilhaften Ausgestaltung kann die Dichtung einen rechteckigen Querschnitt aufweisen. Dichtungen mit Rechteckprofil sind besonders günstig zum Einsatz von Flachfilterelementen geeignet, da so die volle Breite der Dichtung als Dichtfläche zum Einsatz kommt. Auch kann die Lasche bei einer Dichtung mit rechteckigem Querschnitt schon bei geringfügigem Überlappen der Lasche mit der Dichtung beim Einsetzen des Filterelements in das Filtergehäuse zwischen Wand des Filtergehäuses und der Dichtung festgeklemmt werden und so die Wirkung als Einführhilfe als auch als zusätzliche Abdichtungsunterstützung wirksam entfalten. Die als Dichtfläche wirkende, vom Seitenband abgewandte Außenfläche der Dichtung ist bevorzugt im Wesentlichen parallel zur Außenfläche des Seitenbandes ausgerichtet. Dies bedeutet, dass die Außenfläche zumindest über ihre gesamte Breite von dem Seitenband beabstandet ist, insbesondere im Wesentlichen konstant beabstandet ist, derart, dass keine unmittelbare Annäherung oder ein Übergang zur Fläche des Seitenbandes, beispielsweise in Form eines Keiles o. ä. erfolgt. Dadurch können insbesondere im Zusammenhang mit der Gehäusedichtfläche kostengünstig eine definierte Verpressung der Dichtung, eine definierte Dichtposition im Gehäuse, geringe Maßtoleranzen und damit eine reproduzierbar gute Abdichtung erreicht werden.

Bevorzugt deckt die Dichtung nicht die gesamte Breite des Seitenbandes ab. Vielmehr ist es bevorzugt, dass die Dichtung derart entfernt von der Biegekante der V-Lasche auf dem Seitenband angeordnet ist, dass die V-Lasche einen spitzen Winkel ausbildet, wenn sie umgeklappt ist und auf der Außenfläche der Dichtung anliegt.

Bevorzugt ist der Abstand der Dichtung von der Biegekante mindestens genau so groß wie die Dicke der Dichtung, d. h. wie der Abstand der Außenfläche der Dichtung vom Seitenband. Ferner ist der Abstand der Dichtung von der Biegekante auf dem Seitenband höchstens 4 oder 2 mal und besonders bevorzugt höchstens 2 mal so groß wie die Dicke der Dichtung, um den Winkel zwischen V-Lasche und Seitenband nicht zu spitz zu gestalten und um noch eine ausreichende Verpressung der Dichtung sicher zu stellen und/oder ein zu starkes Durchbiegen der V-Lasche beim Einbau zu vermeiden. Als optimal hat sich dabei ein Verhältnis von 1:1 bis 2:1 von Abstand zu Dicke herausgestellt, so dass in unverspanntem Zustand und auf der Dichtung anliegender V-Lasche zwischen V-Lasche und Seitenband spitze Winkel zwischen ca. 30° und ca. 45° gebildet sind.

Auf der der Biegekante abgewandten Seite der Dichtung ist ebenfalls bevorzugt ein Abschnitt des Seitenbandes vorgesehen, der frei liegt, d. h. nicht von der Dichtung bedeckt ist und ebenfalls bevorzugt genau so groß und weiter bevorzugt mindestens doppelt so groß ist wie die Breite und/oder Dicke der Dichtung. Auf diese Weise kann eine definierte Dichtposition im Gehäuse geschaffen und eine kostengünstige, zur einfachen und sicheren Montage beitragende Abdichtung bereitgestellt werden. Es ist ferner bevorzugt, die Dichtung näher an der Reinseite, d. h. näher an der Biegekante der V-Lasche anzuordnen. Dies bedeutet, dass bevorzugt der Abstand der Dichtung von der anströmseitigen Kante des Seitenbandes größer ist als der Abstand von der abströmseitigen (reinseitigen) Kante, d. h. der Biegekante. Dabei ist der Abstand der Dichtung von der anströmseitigen Kante des Seitenbandes bevorzugt 50 % und besonders bevorzugt 100 % größer als der Abstand von der abströmseitigen Kante. Eine Anordnung der Dichtung nahe der Reinseite reduziert das reinluftseitige Volumen und damit die Größe der Flächen, bei welchen eine Leckage negative Auswirkungen hätte.

Bevorzugt sollte die Breite der Dichtung höchstens 50 %, besonders bevorzugt höchstens 30 %, der Breite des Seitenbandes betragen. Weiter bevorzugt sollte die Höhe der unverspannten (relaxierten) Dichtung höchstens 50 %, bevorzugt höchstens 30 %, besonders bevorzugt höchstens 25 % der Breite des Seitenbandes betragen.

Gemäß einer vorteilhaften Ausgestaltung kann das Seitenband zur Bildung der Lasche an einem Umfang der Reinseite umlaufend eingeschnitten oder gestanzt ausgebildet sein. Durch das Einschneiden oder Stanzen des Seitenbandes kann eine zuverlässige Biegekante geschaffen werden, sodass die Lasche sehr definiert durch Umklappen des überstehenden Seitenbandes V-förmig zurückgeklappt werden kann. Gerade bei einem festeren Vlies als Seitenband kann so eine gezielte Schwachstelle günstig für das Bilden einer definierten Lasche dargestellt werden.

Gemäß einer vorteilhaften Ausgestaltung kann die Dichtung Moosgummi oder Zellkautschuk umfassen. Diese Werkstoffe sind besonders günstig bei der Verwendung als Dichtungsmaterialien und deshalb auch in breitem Einsatz zur Verfügung. Auch weisen die Werkstoffe die nötige Elastizität auf, um eine zuverlässige Abdichtung bei geeigneter Überdeckung des Querschnitts der Dichtung mit einem Einbaumaß des Filtergehäuses zu gewährleisten.

Bevorzugt wird eine Dichtung aus einem bevorzugt rechteckigen Endlosprofil gebildet, welches abgelängt und bevorzugt parallel zu den Kanten des Seitenbandes zu einem geschlossenen Ring geformt umlaufend auf die Seitenbänder aufgebracht wird, so dass das Filtermedium und die Seitenbänder vollständig umlaufend umgeben ist.

Gemäß einer vorteilhaften Ausgestaltung kann die Dichtung für den bestimmungsgemäßen Einbau in ein Filtergehäuse für eine Überdeckung von größer 10 %, bevorzugt größer 20 % der Dicke der Dichtung mit einem Einbaumaß des Filtergehäuses ausgelegt sein. Eine solche Überdeckung stellt eine zuverlässige Dichtwirkung bei Verpressung der Dichtung beim Einbau in ein Filtergehäuse, insbesondere mit Unterstützung durch eine V-förmig zurückgeklappte Lasche sicher.

Gemäß einer vorteilhaften Ausgestaltung kann das Seitenband und die Lasche ein Vlies umfassen. Ein Vlies oder ein ähnlicher textiler Werkstoff sind zweckmäßig als Seitenband und damit auch als Lasche einsetzbar, da solche Werkstoffe den Vorteil aufweisen, leicht verarbeitbar zu sein und zusätzlich zur seitlichen Abdichtung des Filterelements geeignet zu sein.

Nach einem weiteren Aspekt betrifft die Erfindung ein Filtersystem zum Filtern eines Fluids mit einem Filterelement, wobei das Filterelement austauschbar in einem Filtergehäuse des Filtersystems angeordnet ist und welches Filterelement einen Filterbalg vorsieht, der an den Stirnseiten ein flächig aufgebrachtes Seitenband aufweist. An einer Außenseite des Seitenbandes ist eine umlaufende Dichtung angeordnet. Dabei ist eine über die Reinseite des Filterbalgs überstehende Lasche des Seitenbandes wenigstens an den Stirnseiten V-förmig zurückgeklappt über der Dichtung angeordnet.

Bei einem solchen erfindungsgemäßen Filtersystem wird ein Teil des zur seitlichen Abdichtung des Filterbalgs, insbesondere bei einem zickzackförmig gefalteten Filtermedium, angeordneten Seitenbands, der über eine untere Kante des Filterbalgs, der die Reinseite begrenzt, übersteht, zurückgeklappt und ragt so V-förmig zum an den Stirnseiten angebrachten Seitenband abstehend, teilweise über die Dichtung. Beim Einführen in das Filtergehäuse wird diese V-förmige Lasche an die Dichtung angepresst und zumindest teilweise zwischen Dichtung und Filtergehäuse eingeklemmt, sodass die Lasche damit am Filtergehäuse fest fixiert ist. Damit wird bei der Kombination aus der V-förmig zurückgeklappten Lasche und der Dichtung eine Abdichtung des Filterelements bei Einbau in das Filtergehäuse sowohl von der Lasche als auch von der Dichtung bewirkt. Auf diese Weise ist ein vereinfachter Einschub des Filterelementes in das Filtergehäuse möglich, wodurch der Kraftaufwand zum Einführen des Filterelements in das Filtergehäuse reduziert wird.

Gemäß einer vorteilhaften Ausgestaltung kann im eingebauten Zustand des Filterelements die Lasche die Dichtung an einer Außenseite wenigstens teilweise überdecken. Dadurch ist gewährleistet, dass beim Einsetzen des Filterelements in ein Filtergehäuse, die Lasche zwischen Dichtung und Wand des Filtergehäuses eingeklemmt wird und so sowohl das Einsetzen des Filterelements durch eine Vorverpressung der Dichtung erleichtert als auch eine zusätzliche Dichtwirkung über die Lasche erfolgen kann. Auch kann das Filterelement so leichter in das Filtergehäuse hineingleiten, sodass das Risiko, dass die Dichtung sich vom Seitenband löst, reduziert wird.

Gemäß einer vorteilhaften Ausgestaltung kann im eingebauten Zustand des Filterelements die Lasche wenigstens teilweise zwischen Dichtung und einer Gehäusewand des Filtergehäuses angeordnet sein. Dadurch wird die Lasche zwischen der Wand des Filtergehäuses und der Dichtung eingeklemmt, sodass damit auf jeden Fall gewährleistet ist, dass die Lasche die Dichtwirkung der Dichtung zusätzlich unterstützt und sich auch die Dichtung beim Einführen des Filterelements in das Filtergehäuse nicht von dem Seitenband, auf welches die Dichtung aufgeklebt oder aufgeschäumt ist, lösen kann.

Gemäß einer vorteilhaften Ausgestaltung kann im eingebauten Zustand die Lasche zu den Stirnseiten in einem spitzen Winkel, bevorzugt kleiner als 45°, angeordnet sein. Eine solche geometrische Anordnung begünstigt den Einführprozess des Filterelements in das Filtergehäuse. Dadurch wird die zum Einsetzen benötigte Kraft, die auf das Filterelement ausgeübt werden muss, reduziert. Damit reduziert sich auch das Risiko, dass die Dichtung beim Einsetzen des Filterelements in das Filtergehäuse sich von dem Seitenband lösen kann.

Nach einem weiteren Aspekt betrifft die Erfindung eine Verwendung des Filtersystems zur Luftfilterung, insbesondere zur Innenraumluftfilterung, insbesondere eines Fahrzeugs.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: einen Längsschnitt durch ein Filterelement mit einem zickzackgefalteten Filtermedium und einer V-förmig zurückgeklappten Lasche nach einem Ausführungsbeispiel der Erfindung in isometrischer Darstellung;
- Fig. 2: das Filterelement nach Figur 1 in isometrische Darstellung;
- Fig. 3: das Filterelement nach Figur 1 beim Einsetzen in ein Filtergehäuse;
- Fig. 4: das Einsetzen des Filterelements in ein Filtergehäuse nach Figur 3 in einem Querschnitt parallel zu den Falten des Filtermediums;
- Fig. 5: das Einsetzen des Filterelements in ein Filtergehäuse nach Figur 3 in einem Längsschnitt;
- Fig. 6: ein Detailausschnitt aus der Figur 5 mit Fokus auf die Dichtung und die Lasche;
- Fig. 7: ein Filtersystem nach einem Ausführungsbeispiel der Erfindung mit in ein Unterteil des Filtergehäuses eingesetztem Filterelement; und
- Fig. 8: ein Detailausschnitt aus der Figur 7 mit Fokus auf die Dichtung und die Lasche.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

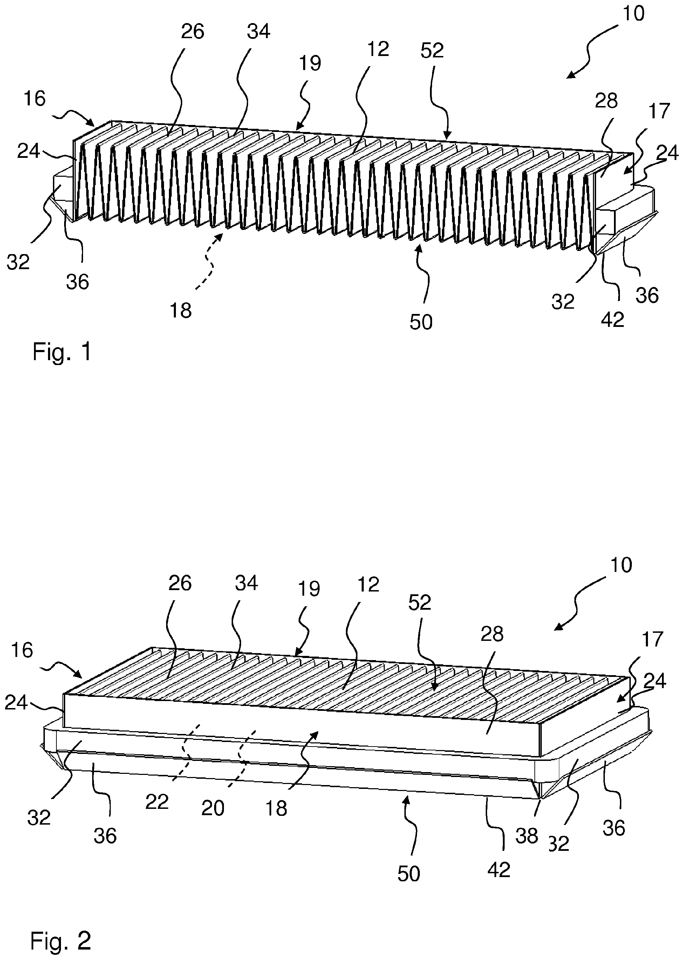

Figur 1 zeigt einen Längsschnitt durch ein Filterelement 10 zum Filtern eines Fluids, insbesondere zur Luftfilterung, bevorzugt zur Innenraumluftfilterung, insbesondere eines Fahrzeugs, mit einem zickzackgefalteten Filtermedium 14 und einer V-förmig zurückgeklappten Lasche 36 nach einem Ausführungsbeispiel der Erfindung in isometrischer Darstellung. Das Filterelement 10 umfasst einen flachen Filterbalg 12 aus einem Filtermedium 14 mit einer bestimmungsgemäßen Rohseite 52 und einer dieser gegenüberliegenden bestimmungsgemäßen Reinseite 50. An den Filterbalg 12 umgebenden Stirnseiten 16, 17, 18, 19 ist umlaufend ein flächig aufgebrachtes Seitenband 28 angeordnet. An der Außenseite des Seitenbandes 28 ist eine umlaufende Dichtung 32 angeordnet. Das Seitenband 28 weist eine über die Reinseite 50 des Filterbalgs 12 überstehende Lasche 36 auf, welche Lasche 36 an den Stirnseiten 16, 17, 18, 19 V-förmig zurückgeklappt über der Dichtung 32 angeordnet ist.

Das Filtermedium 14 ist entlang von Faltkanten 26 zickzackförmig zu Falten 34 gefaltet, die sich jeweils zwischen gegenüberliegenden Stirnkanten 22 des Filterbalgs 12 erstrecken. Das Filtermedium 14 weist jeweils auf den gegenüberliegenden Stirnseiten 18, 19 parallel zueinander verlaufende Stirnkantenflächen 20 auf. Weiter weist das Filtermedium 14 auf den quer dazu liegenden Stirnseiten 16, 17 Stirnflächen 24 auf, wobei der Filterbalg 12 an den Stirnkantenflächen 20 und Stirnflächen 24 mit dem Seitenband 28 abgedichtet ist. Die Dichtung 32 weist einen rechteckigen Querschnitt auf, und umfasst üblicherweise Moosgummi oder Zellkautschuk, was sich als besonders günstiges Dichtungsmaterial mit geeigneten elastischen Eigenschaften erwiesen hat. Die Lasche 36 überdeckt die Dichtung 32 an der Außenseite geringfügig, da die Lasche 36 bis zu der der Reinseite 50 zugewandten Kante 38 der Dichtung 32 heranreichend ausgebildet ist. Alternativ könnte die Lasche 36 mit ihrem freien Ende 37 auch bis unterhalb einer der Rohseite 52 zugewandten Kante 39 der Dichtung 32 heranreichend ausgebildet sein. Das Seitenband 28 ist zweckmäßig zur Bildung der Lasche 36 an einem Umfang 42 der Reinseite 50 umlaufend eingeschnitten oder gestanzt ausgebildet, um so die Lasche zuverlässig zurückklappen zu können. Das Seitenband 28 und die Lasche 36 umfassen ein Vlies oder ein ähnliches textiles Gewebe, da diese Materialien gut dichten und sich leicht verarbeiten lassen.

Figur 2 zeigt das ganze Filterelement 10 nach Figur 1 in isometrischer Darstellung. Das Filterelement 10 ist umlaufend mit dem Seitenband 28 abgedichtet. Ebenfalls umlaufend ist außen auf das Seitenband 28 die mit rechteckigem Querschnitt ausgeführte Dichtung angeordnet, beispielsweise aufgeklebt. Die als Überstand des Seitenbandes 28 über die Reinseite 50 des Filterelements 10 gebildete Lasche 36 ist in Richtung der Rohseite 52 bis über die reinseitige Kante 38 der Dichtung 32 an allen Stirnseiten 16, 17, 18, 19 V-förmig zurückgeklappt. An den Ecken des Filterelements 10 treten auf Grund der Bildung der Lasche 36 aus dem Seitenband 28 freibleibende Zwickel der Lasche 36 auf. Die Seitenbänder 28 bilden die Seitenflächen eines geraden, vorliegend 4-eckigen, rechteckigen Prismas. Dessen Grundflächen sind bevorzugt durch die durchströmten Flächen definiert, insbesondere die Reinseite 50 und Rohseite 52, insbesondere jeweils definiert durch die Faltkanten des Filtermediums 14. Die Höhe dieses Prismas wird bestimmt durch die Breite der Seitenbänder 25 (ohne V-Lasche), die bevorzugt umlaufend konstant ist. Bevorzugt ist wie gezeigt an jeder Seite des Prismas ein Seitenband 28 und eine Lasche 36 vorgesehen, d. h. es sind 4 Laschen 36 vorgesehen, damit umlaufend eine einbauerleichternde Wirkung erzielt werden kann.

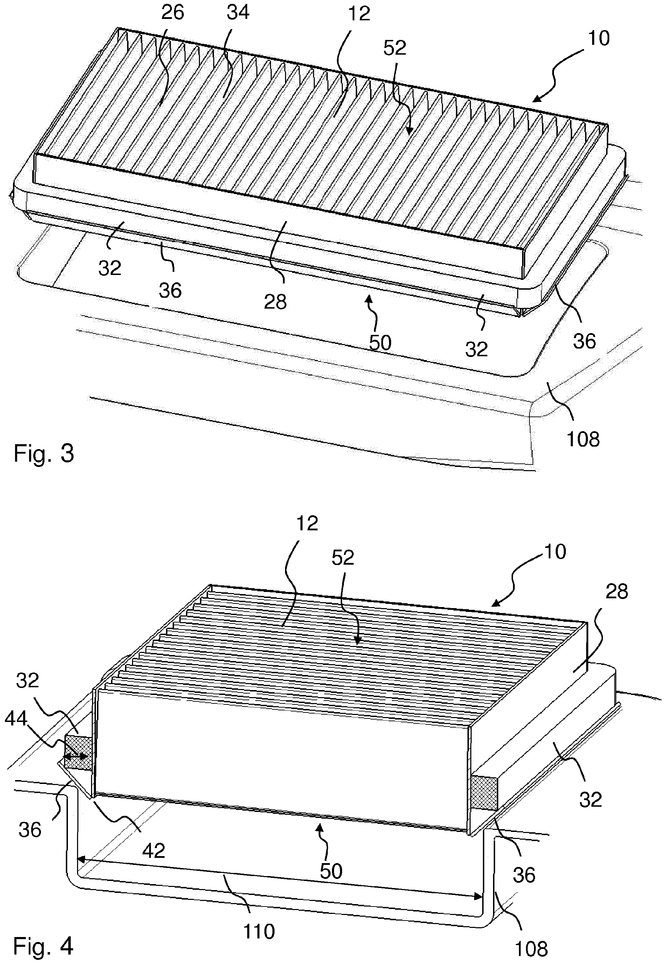

In Figur 3 ist das Filterelement 10 nach Figur 1 beim Einsetzen in ein Filtergehäuse 108 dargestellt. Das Filterelement 10 kann durch Absenken von oben in ein Unterteil des Filtergehäuses 108 eingesetzt werden. Dabei legt sich die Lasche 36 an die Dichtung 32 an, sodass die Lasche 36 das Einführen des Filterelements 10 in das Filtergehäuse 108 durch Reduktion der nötigen Einführkraft erleichtert. Außerdem wird durch Einklemmen der Lasche 36 zwischen Wand des Filtergehäuses 108 und Dichtung 32 eine zusätzliche Dichtwirkung begünstigt.

Figur 4 zeigt das Einsetzen des Filterelements 10 in ein Filtergehäuse 108 nach Figur 3 in einem Querschnitt parallel zu den Falten des Filtermediums 14. Das Filterelement 10 ist unmittelbar über die Öffnung des Unterteils des Filtergehäuses 108 geführt und wird zum weiteren Einsetzen in das Filtergehäuse 108 dann weiter abgesenkt. In dieser Darstellung ist zu sehen, dass die Dichtung 32 für den bestimmungsgemäßen Einbau in das Filtergehäuse 108 zweckmäßigerweise für eine Überdeckung von größer 10 %, bevorzugt größer 20 % der Dicke 44 der Dichtung 32 mit einem Einbaumaß 110, das der lichten Weite des Filtergehäuses 108 entspricht, ausgelegt ist. Beim weiteren Einführen des Filterelements 10 in das Filtergehäuse 108 legt sich die Lasche 36 an die Wand des Filtergehäuses 108 zwischen Dichtung 32 und Wand an. Die Dichtung 32 wird beim Einführen des Filterelements 10 zusammengepresst, um so zusammen mit der Lasche 36 die volle Dichtwirkung zu entfalten.

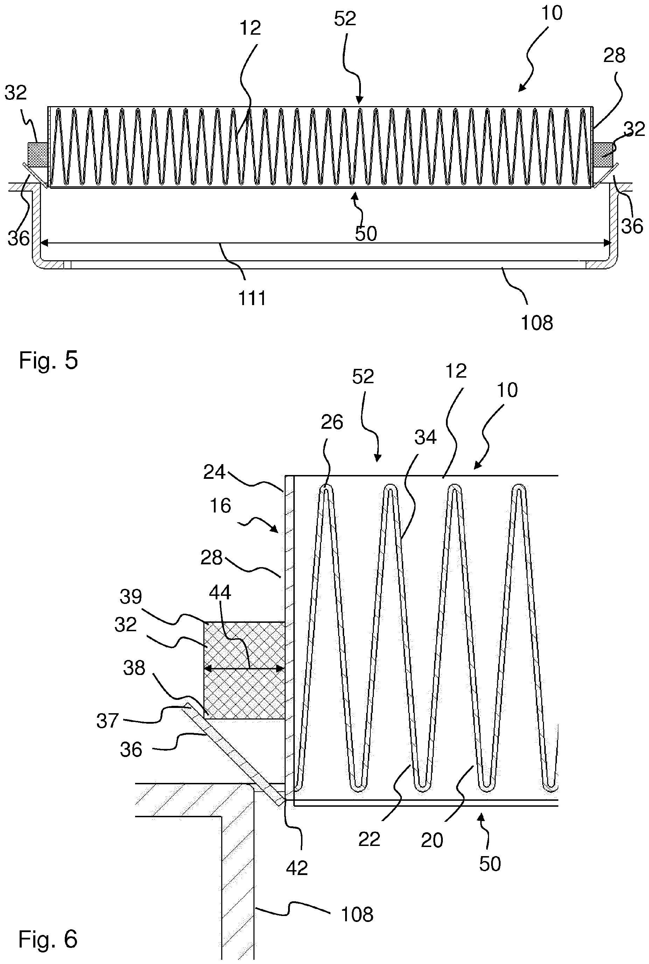

In Figur 5 ist das Einsetzen des Filterelements 10 in das Filtergehäuse 108 nach Figur 3 in einem Längsschnitt, also in der anderen Dimension, dargestellt. Auch hier ist die Überdeckung der Dichtung 32 im nicht verpressten Zustand mit dem Einbaumaß 111 in dieser Dimension zu erkennen, womit eine wirksame und zuverlässige Abdichtung des Filterelements 10 gegen das Filtergehäuse 108 erreicht wird.

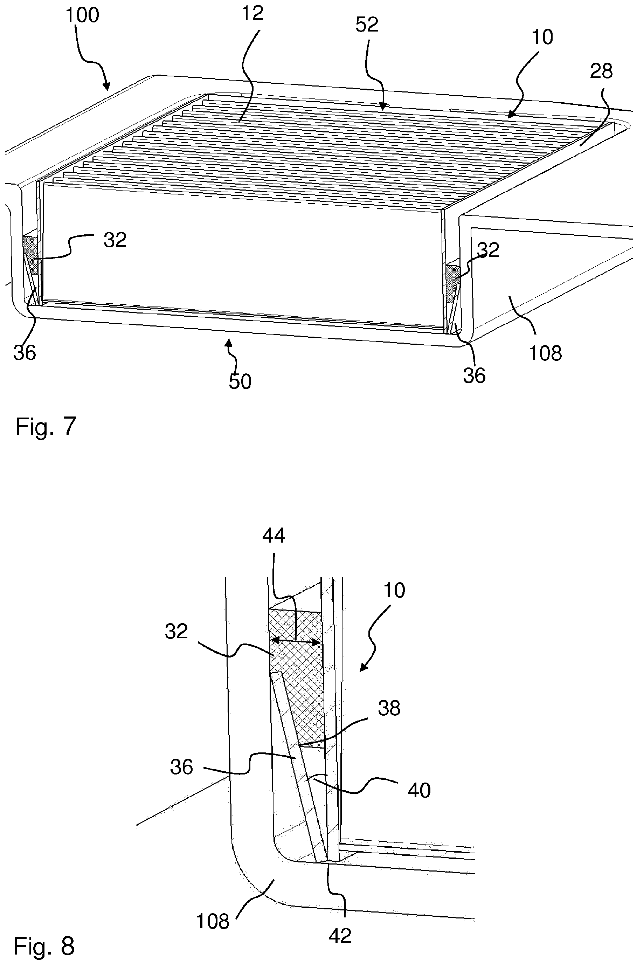

Figur 6 zeigt einen Detailausschnitt aus der Figur 5 mit Fokus auf die Dichtung 32 und die Lasche 36. Der Filterbalg 12 ist mit den aufgestellten Falten 34 des Filtermediums 14, die mit den Faltkanten 26 jeweils die Rohseite 52, bzw. die Reinseite 50 darstellen, parallel zur Stirnkantenfläche 20 der Stirnkanten 22 geschnitten. In der Ebene quer dazu schließt der Filterbalg an der Stirnseite 16 mit der Stirnfläche 24 ab. Rundumlaufend ist der Filterbalg 12 mit dem Seitenband 28 abgeschlossen und abgedichtet. Auf das Seitenband 28 ist die Dichtung 32, die mit rechteckigem Querschnitt ausgeführt ist, der eine Dicke 44 aufweist, auf das Seitenband 28 aufgeklebt. Das Seitenband 28 ist zweckmäßig zur Bildung der Lasche 36 an einem Umfang 42 der Reinseite 50 umlaufend eingeschnitten oder gestanzt ausgebildet, um so die Lasche 36 zuverlässig zurückklappen zu können. Wie bevorzugt und wie in Fig. 6 gezeigt, entspricht der Abstand der Dichtung 32 von der Biegekante (hier Umfang 42) etwa der Dicke 44 der Dichtung 32, so dass beim Zurückklappen der Lasche 36 ein spitzer Winkel von höchstens 45° zur Außenseite 28 des Seitenbandes 28 gebildet werden kann. Wie aus den Figuren 7 und 8 ersichtlich, wird der Winkel beim Einbau durch die Verpressung der Dichtung 32 spitzer. Die Lasche 36 ist bei der Ausführungsform in Figur 6 mit dem freien Ende 37 der Lasche 36 an die reinseitige Kante 38 der Dichtung 32 heranreichend ausgeführt. Alternativ kann die Lasche 36 auch bis zur rohseitigen Kante 39 der Dichtung 32 heranreichend ausgeführt sein. Beim Einführen des Filterelements 10 in das Filtergehäuse 108 wird die Lasche 36 zunächst in Richtung des Filterelements 10 gepresst. Dabei wird die Dichtung 32 mitverpresst, sodass das Filterelement 10 mit Lasche 36 und Dichtung 32 in die Öffnung des Filtergehäuses 108 hineingleiten kann und dort einen festen abgedichteten Sitz einnehmen kann.

Die Dichtung 32 ist in der gezeigten Ausführungsform wie auch bevorzugt aus einem rechteckigen Endlosprofil gebildet, welches abgelängt und bevorzugt parallel zu den Kanten des Seitenbandes 28 zu einem geschlossenen Ring geformt umlaufend auf die Seitenbänder 28 aufgebracht wird, so dass das Filtermedium 14 und die Seitenbänder 28 vollständig umlaufend umgeben ist.

Figur 7 zeigt das Filtersystem 100 nach einem Ausführungsbeispiel der Erfindung, das zur Luftfilterung, insbesondere zur Innenraumluftfilterung, insbesondere eines Fahrzeugs, vorgesehen ist, mit in das Unterteil des Filtergehäuses 108 eingesetztem Filterelement 10. Das Filterelement 10 ist damit austauschbar in dem Filtergehäuse 108 des Filtersystems angeordnet. Das Filterelement 10 sieht den Filterbalg 12 vor, der an den Stirnseiten 16, 17, 18, 19 das flächig aufgebrachte Seitenband 28 aufweist. An der Außenseite des Seitenbandes 28 ist die umlaufende Dichtung 32 angeordnet. Die über die Reinseite 50 des Filterbalgs 12 überstehende Lasche 36 des Seitenbandes 28 ist an den Stirnseiten 16, 17, 18, 19 zurückgeklappt über der Dichtung 32 angeordnet. In dem in Figur 7 dargestellten eingebauten Zustand des Filterelements 10 überdeckt die Lasche 36 die Dichtung 32 an der Außenseite wenigstens teilweise. Die Lasche 36 ist so im eingebauten Zustand des Filterelements 10 wenigstens teilweise zwischen Dichtung 32 und einer Gehäusewand 112 des Filtergehäuses 108 angeordnet und kann so eine zusätzliche Dichtwirkung durch zusätzliches Verpressen der Dichtung 32 und das Einklemmen der Lasche 36 zwischen Wand des Filtergehäuses 108 und der Dichtung 32 ausüben.

In Figur 8 ist dazu ein Detailausschnitt aus der Figur 7 mit Fokus auf die Dichtung 32 und die Lasche 36 dargestellt. In Figur 7 ist zu erkennen, dass die Dichtung 32 durch das Einsetzen des Filterelements 10 in das Filtergehäuse 108 verpresst ist, sodass die Dicke 44 der Dichtung 32 im eingebauten Zustand auf Grund der Überdeckung der Dichtung 32 mit dem Einbau 110, 111 signifikant reduziert ist. Die Lasche 36 überdeckt im eingebauten Zustand die Dichtung 32 auch teilweise, indem die Lasche 36 zwischen Wand des Filtergehäuses 108 und Dichtung 32 eingeklemmt ist. Die Lasche 36 ist im eingebauten Zustand zu den Stirnseiten 16, 17, 18, 19 des Filterelements 10 in einem spitzen Winkel 40, bevorzugt kleiner als 45°, angeordnet ist. Durch die Anordnung der Lasche 36 im spitzen Winkel 40 wird die Funktion einer Einführhilfe der Lasche 36 begünstigt, da auf diese Weise das Filterelement 10 mit reduzierter Kraft in das Filtergehäuse 108 eingeführt werden kann.

## Patentansprüche

1. Filterelement (10) zum Filtern eines Fluids, insbesondere zur Luftfilterung, insbesondere zur Innenraumluftfilterung, insbesondere eines Fahrzeugs, umfassend
- wenigstens einen, insbesondere flachen, Filterbalg (12) aus einem Filtermedium (14) mit einer bestimmungsgemäßen Rohseite (52) und einer dieser gegenüberliegenden bestimmungsgemäßen Reinseite (50),
wobei an den Filterbalg (12) umgebenden Stirnseiten (16, 17, 18, 19) umlaufend ein flächig aufgebrachtes Seitenband (28) angeordnet ist,
wobei an einer Außenseite des Seitenbandes (28) eine umlaufende Dichtung (32) angeordnet ist, und
wobei das Seitenband (28) eine über die Reinseite (50) des Filterbalgs (12) überstehende Lasche (36) aufweist, welche Lasche (36) an den Stirnseiten (16, 17, 18, 19) V-förmig zurückgeklappt über der Dichtung (32) anordenbar ist, **dadurch gekennzeichnet, dass** die Lasche (36) die Dichtung (32) an einer Außenseite nur teilweise derart überdeckt, dass ein insbesondere vollständig umlaufender, nicht von der Lasche (36) überdeckter Bereich einer Außenfläche der Dichtung zur dichtenden Anlage an einem Filtergehäuse frei bleibt, der eine Breite von mindestens 20 % der Breite der Außenfläche der Dichtung aufweist.

2. Filterelement nach Anspruch 1, wobei die Außenfläche der Dichtung parallel zum Seitenband (28) angeordnet ist.

3. Filterelement nach einem der vorhergehenden Ansprüche, wobei das Filtermedium (14) entlang von Faltkanten (26) zickzackförmig zu Falten (34) gefaltet ist, die sich jeweils zwischen gegenüberliegenden Stirnkanten (22) des Filterbalgs (12) erstrecken, und jeweils auf den gegenüberliegenden Stirnseiten (18, 19) parallel zueinander verlaufende Stirnkantenflächen (20) aufweist und auf den quer dazu liegenden Stirnseiten (16, 17) Stirnflächen (24) aufweist, wobei der Filterbalg (12) an den Stirnkantenflächen (20) und Stirnflächen (24) mit dem Seitenband (28) abgedichtet ist.

4. Filterelement nach einem der vorhergehenden Ansprüche, wobei die Dichtung (32) einen rechteckigen Querschnitt aufweist.

5. Filterelement nach einem der vorhergehenden Ansprüche, wobei das Seitenband (28) zur Bildung der Lasche (36) an einem Umfang (42) der Reinseite (50) umlaufend eingeschnitten oder gestanzt ausgebildet ist.

6. Filterelement nach einem der vorhergehenden Ansprüche, wobei die Dichtung (32) Moosgummi oder Zellkautschuk umfasst.

7. Filterelement nach einem der vorhergehenden Ansprüche, wobei das Seitenband (28) und die Lasche (36) ein Vlies umfassen oder aus Vlies gebildet sind.

8. Filtersystem (100) zum Filtern eines Fluids mit einem Filterelement (10) nach einem der vorhergehenden Ansprüche, wobei das Filterelement (10) austauschbar in einem Filtergehäuse (108) des Filtersystems angeordnet ist und das Filterelement (10) einen Filterbalg (12) vorsieht, der an den Stirnseiten (16, 17, 18, 19) ein flächig aufgebrachtes Seitenband (28) aufweist,
wobei an einer Außenseite des Seitenbandes (28) eine umlaufende Dichtung (32) angeordnet ist, und
wobei eine über die Reinseite (50) des Filterbalgs (12) überstehende Lasche (36) des Seitenbandes (28) wenigstens an den Stirnseiten (16, 17, 18, 19) V-förmig zurückgeklappt über der Dichtung (32) angeordnet ist.

9. Filtersystem nach Anspruch 8, wobei im eingebauten Zustand des Filterelements (10) die Lasche (36) die Dichtung (32) an einer Außenseite nur teilweise überdeckt.

10. Filtersystem nach Anspruch 8 oder 9, wobei im eingebauten Zustand des Filterelements (10) die Lasche (36) wenigstens teilweise zwischen Dichtung (32) und einer Gehäusewand (112) des Filtergehäuses (108) angeordnet ist.

11. Filtersystem nach einem der Ansprüche 8 bis 10, wobei im eingebauten Zustand die Lasche (36) zu den Stirnseiten (16, 17, 18, 19) in einem spitzen Winkel (40), bevorzugt kleiner als 45°, weiter bevorzugt größer 30°, angeordnet ist.

12. Filtersystem nach einem der Ansprüche 8 bis 11, wobei die Dichtung (32) für den bestimmungsgemäßen Einbau in ein Filtergehäuse (108) für eine Überdeckung von größer 10 %, bevorzugt größer 20 % der Dicke (44) der Dichtung (32) mit einem Einbaumaß (110) des Filtergehäuses (108) ausgelegt ist.

## Claims

1. Filter element (10) for the filtration of a fluid, in particular for air filtration, in particular for cabin air filtration, in particular of a vehicle, comprising
- at least one, in particular flat, filter bellows (12) made of a filter medium (14) with an intended raw side (52) and an intended clean side (50) opposing the raw side,
wherein a lateral strip (28) applied in a flat design is circumferentially disposed around the front sides (16, 17, 18, 19) surrounding the filter bellows (12), wherein a circumferential seal (32) is disposed on an exterior side of the lateral strip (28), and
wherein the lateral strip (28) features a flap (36) projecting beyond the clean side (50) of the filter bellows (12), which flap (36) can be disposed above the seal (32) folded back in a V-shape on the front sides (16, 17, 18, 19), **characterized in that** the flap (36) only partially overlaps the seal (32) on an exterior side in such a way that an in particular completely circumferential region of an outer surface of the seal, not covered by the flap (36), remains free for sealing abutment against a filter housing, said region having a width of at least 20% of the width of the outer surface of the seal.

2. Filter element according to claim 1, wherein the outer surface of the seal is disposed parallel to the lateral strip (28).

3. Filter element according to one of the preceding claims, wherein the filter medium (14) is zigzag-folded along fold edges (26) to form folds (34) which extend each between opposing front edges (22) of the filter bellows (12), and this filter medium features on opposing front sides (18, 19) each front edge surfaces (20) running parallel to each other and features front faces (24) on transversely thereto lying front sides (16, 17), wherein the filter bellows (12) is sealed with the lateral strip (28) on the front edge surfaces (20) and the front faces (24).

4. Filter element according to one of the preceding claims, wherein the seal (32) features a rectangular cross-section.

5. Filter element according to one of the preceding claims, wherein the lateral strip (28) is cut or punched circumferentially on a circumference (42) of the clean side (50) to form the flap (36).

6. Filter element according to one of the preceding claims, wherein the seal (32) comprises sponge piping or foam rubber.

7. Filter element according to one of the preceding claims, wherein the lateral strip (28) and the flap (36) comprise non-woven fabric or are made of non-woven fabric.

8. Filter system (100) for filtering a fluid having a filter element (10) according to one of the preceding claims, wherein the filter element (10) is replaceably disposed in a filter housing (108) of the filter system and the filter element (10) provides a filter bellows (12) which features a flatly applied lateral strip (28) at the front sides (16, 17, 18, 19),
wherein a circumferential seal (32) is disposed on an exterior side of the lateral strip (28), and
wherein a flap (36) projecting beyond the clean side (50) of the filter bellows (12) of the lateral strip (28) is at least disposed above the seal (32) folded back in a V-shape design on the front sides (16, 17, 18, 19).

9. Filter system according to claim 8, wherein the flap (36) in the installed state of the filter element (10) covers the seal (32) only partially on an exterior side.

10. Filter system according to claim 8 or 9, wherein the flap (36), in the installed state of the filter element (10), is at least partially disposed between the seal (32) and a housing wall (112) of the filter housing (108).

11. Filter system according to one of the claims 8 to 10, wherein the flap (36), in the installed state, is disposed relative to the front sides (16, 17, 18, 19) at an acute angle (40), preferably less than 45°, further preferably greater than 30°.

12. Filter system according to one of the claims 8 to 11, wherein the seal (32) is designed for the intended installation into a filter housing (108) for an overlap larger than 10%, preferably larger than 20% of the thickness (44) of the seal (32) with a fitting dimension (110) of the filter housing (108).

## Revendications

1. Élément filtrant (10) destiné au filtrage d'un fluide, notamment au filtrage d'air, notamment au filtrage d'air intérieur, notamment d'un véhicule automobile, comprenant
- au moins un soufflet de filtre (12), notamment plat, constitué d'un milieu filtrant (14) avec un côté brut (52) conforme à l'utilisation et un côté pur (50) conforme à l'utilisation situé du côté opposé du côté brut,
dans lequel une bande latérale (28) appliquée sur la surface est disposée autour des faces frontales (16, 17, 18, 19) entourant le soufflet de filtre (12),
dans lequel un joint périphérique (32) est placé sur une face extérieure de la bande latérale (28), et
dans lequel la bande latérale (28) présente une patte (36) qui dépasse du côté pur (50) du soufflet de filtre (12), laquelle patte (36) peut être disposée au-dessus du joint (32) en position rabattue en V sur les faces frontales (16, 17, 18, 19), **caractérisé en ce que** la patte (36) ne recouvre le joint (32) sur une face extérieure que partiellement, de manière à ce qu'une partie notamment entièrement circulaire, non recouverte par la patte (36), d'une surface extérieure du joint reste libre pour générer un contact étanchant avec un boîtier de filtre, ladite zone présente une largeur d'au moins 20 % de la largeur de la surface extérieure du joint.

2. Élément filtrant selon la revendication 1, dans lequel la surface extérieure du joint évolue de manière parallèle à la bande latérale (28).

3. Élément filtrant selon l'une des revendications précédentes, dans lequel le milieu filtrant (14) est plié le long d'arêtes de pliage (26) en plis (34) en zigzag qui s'étendent entre des bords frontaux (22) respectivement opposés du soufflet de filtre (12), et ce milieu filtrant présente sur les faces frontales (18, 19) respectivement opposées des surfaces d'arêtes frontales (20) parallèles et présente des faces d'extrémité (24) sur les faces frontales transversales (16, 17) s'étendant transversalement à celles-ci, dans lequel le soufflet de filtre (12) est étanché au moyen de la bande latérale (28) sur les surfaces d'arêtes frontales (20) et les faces d'extrémité (24).

4. Élément filtrant selon l'une des revendications précédentes, dans lequel le joint (32) présente une section rectangulaire.

5. Élément filtrant selon l'une des revendications précédentes, dans lequel la bande latérale (28) est incisée ou découpée de manière périphérique sur un pourtour (42) du côté pur (50) afin de former la patte (36).

6. Élément filtrant selon l'une des revendications précédentes, dans lequel le joint (32) comprend du caoutchouc mousse ou du caoutchouc cellulaire.

7. Élément filtrant selon l'une des revendications précédentes, dans lequel la bande latérale (28) et la patte (36) comprennent du non-tissé ou sont constituées de non-tissé.

8. Système de filtre (100) destiné à filtrer un fluide avec un élément filtrant (10) selon l'une des revendications précédentes, dans lequel l'élément filtrant (10) est disposé dans un boîtier de filtre (108) du système de filtre de manière échangeable, et l'élément filtrant (10) est pourvu d'un soufflet de filtre (12) qui présente une bande latérale (28) appliquée sur la surface et disposée sur les faces frontales (16, 17, 18, 19),
dans lequel un joint périphérique (32) est disposé sur une face extérieure de la bande latérale (28), et
dans lequel une patte (36) qui dépasse du côté pur (50) du soufflet de filtre (12) de la bande latérale (28) est disposée au-dessus du joint (32) en position rabattue en V au moins sur les faces frontales (16, 17, 18, 19).

9. Système de filtre selon la revendication 8, dans lequel la patte (36) ne recouvre que partiellement le joint (32) sur une face extérieure lorsque l'élément filtrant (10) est monté.

10. Système de filtre selon la revendication 8 ou 9, dans lequel la patte (36) est disposée, au moins partiellement, entre le joint (32) et une paroi de boîtier (112) du boîtier de filtre (108) lorsque l'élément filtrant (10) est monté.

11. Système de filtre selon l'une des revendications 8 à 10, dans lequel la patte (36) est disposée, en position montée, dans un angle aigu (40), de préférence inférieur à 45° et plus préférablement supérieur à 30°, par rapport aux faces frontales (16, 17, 18, 19).

12. Système de filtre selon l'une des revendications 8 à 11, dans lequel le joint (32) est conçu pour un montage conforme dans un boîtier de filtre (108) en vue d'un recouvrement de plus de 10 %, de préférence de plus de 20 %, de l'épaisseur (44) du joint (32) avec une dimension de montage (110) du boîtier de filtre (108).
